# EUROPÄISCHE PATENTSCHRIFT

(11) **EP 1 456 101 B1**
(45) Veröffentlichungstag und Bekanntmachung des Hinweises auf die Patenterteilung: **07.09.2005**
(21) Anmeldenummer: 02787909.7
(22) Anmeldetag: 05.12.2002
(51) Int. Cl.: B65G 47/08, B65G 57/26

(54) **VERFAHREN UND VORRICHTUNG ZUR REIHENBILDUNG VON PACKGÜTERN**
METHOD AND DEVICE FOR FORMING ROWS OF PACKED GOODS
PROCEDE ET DISPOSITIF POUR FORMER DES RANGEES D'ARTICLES EMPAQUETES

(30) Priorität: 07.12.2001 DE 20119851 U
(43) Veröffentlichungstag der Anmeldung: 15.09.2004
(73) Patentinhaber: Autefa Automation GmbH, 86316 Friedberg (DE)
(72) Erfinder: HIRSCHEK, Herwig, 86399 Bobingen (DE)
(74) Vertreter: Ernicke, Klaus Stefan
(86) Internationale Anmeldenummer: PCT/EP2002/013759
(87) Internationale Veröffentlichungsnummer: WO 2003/048010

(56) Entgegenhaltungen:
- DE-A- 4 436 075
- DE-U- 8 214 719
- US-A- 3 257 015

## Beschreibung

Die Erfindung betrifft ein Verfahren und eine Vorrichtung zur Reihenbildung von Packgütern an einem Gebindepalettierer mit den Merkmalen im Oberbegriff des Hauptanspruchs.

In der Praxis sind Gebindepalettierer bekannt, die eine Lagenstation aufweisen, in der aus den einzelnen Packgütern die palettiergerechte Packgutlage gebildet wird, welche anschließend an eine benachbarte Palettierstation übergeben wird. An der Palettierstation wird der Palettenstapel aufgerichtet. Die Packgüter werden an der Lagenstation in einer Reihenanordnung auf einer antriebslosen Rollenbahn bereit gestellt, wobei die Reihenbildung über einschwenkbare Anschläge oder dergleichen erst an dieser Rollenbahn erfolgt. Die vorbekannte Konstruktion hat Probleme mit der Geschwindigkeit und dem Durchsatzvolumen. Die stationäre Reihenbildung auf der Rollenbahn kostet viel Zeit und führt zu unerwünschten Pufferzeiten. Hieraus können wiederum Schwierigkeiten mit Doppelzählungen der Packgüter und einer korrekten Reihenbildung entstehen. Außerdem werden zur Abstandsbildung zwischen den einzelnen Packgütern und zur Drehung der Packgüter starre Anschläge verwendet, die in Verbindung mit hohen Beschleunigungen die Packgüter in unerwünschter Weise belasten. Zudem ist die Positionierung und Orientierung der Packgüter bei der Reihenbildung nicht optimal, wobei z.B. unkontrollierte Schiefstellungen der Packgüter oder ein Zusammenbrechen der Packgutreihen nicht auszuschließen sind. Außerdem unterliegen die Art der verarbeitbaren Packgüter und die möglichen Formen der Packgutreihen Beschränkungen.

Eine Palettier-Einrichtung ist, z.B., aus der DE 44 36 075 bekannt.

Es ist Aufgabe der vorliegenden Erfindung, eine bessere Technik zur Reihenbildung aufzuzeigen.

Die Erfindung löst diese Aufgabe mit den Merkmalen im Verfahrens- und Vorrichtungshauptanspruch.
Mit der erfindungsgemäßen Technik erfolgt die Reihenbildung vor der Bereitstellung an der Lagenstation und während des Packguttransports. Hierbei werden die Packgüter im Durchlauf auf die gewünschten Abstände und ggf. auch in die richtige Orientierung, insbesondere Drehlage gebracht und lagengerecht positioniert. Durch die individuelle Reihenbildung können komplizierte Lagenbilder unter bestmöglicher Platzausnutzung und Packungsdichte geschaffen werden. Die Packgüter lassen sich auch schonender behandeln.

Die bereits vor der Lagenstation gebildete Packgutreihe kann mit hoher Geschwindigkeit an einen der Lagenstation zugeordneten Bereitstellungsförderer übergeben werden, von dem die fertige Reihe sofort an die Lagenstation übergeben und insbesondere quer abgeschoben werden kann. Der Bereitstellungsförderer ist dann schnell wieder frei zur Aufnahme der nächsten ankommenden Packgutreihe.

Die erfindungsgemäße Technik hat den Vorteil, dass die Reihenbildung sehr schnell und schonend erfolgt und dass insbesondere auch die Übergabe an die Lagenstation wesentlich schneller als beim Stand der Technik erfolgen kann. Beim Stand der Technik ging durch die Reihenbildung auf der Rollenbahn viel Zeit verloren, weil die zuerst ankommenden Packgüter ruhen mussten, bis das letzte Packgut angekommen war und die Packgutreihe stationär gebildet wurde. Diese Wartezeiten können bei der erfindungsgemäßen Technik durch die Reihenbildung auf dem Transportweg vor der Lagenstation entfallen. Außerdem kann mit wesentlich höheren Geschwindigkeiten als beim Stand der Technik gefahren werden.

Ferner kann auf einschwenkbare Schwerter und andere Abstandsbildner am Bereitstellungsförderer verzichtet werden. Der hiermit verbundene hohe Konstruktions- und Bauaufwand kann entfallen. Durch die Reihenbildung beim Transport bestehen wesentlich mehr und individuellere Gestaltungsmöglichkeiten für die Abstände in der Packgutreihe als beim Stand der Technik, wobei sich außerdem noch die Orientierung und insbesondere die Drehlage der Packgüter beliebig einstellen lässt.

Zudem wird die Betriebssicherheit wesentlich erhöht. Die Orientierungen und Positionierungen der Packgüter sowie die Bildung und Formstabilität der Packgutreihen sind in der Genauigkeit besser und zudem sicherer als bisher. Ferner können die bisherigen Beschränkungen bei der Art und Form der Packgüter und der Gestalt der Packgutreihen zumindest weitgehend entfallen.

Die erfindungsgemäße Technik ermöglicht darüber hinaus noch eine weitere Leistungssteigerung, indem mehrere Reihenbildungsvorrichtungen an einer Seite der Lagenstation parallel nebeneinander angeordnet sind, wobei durch entsprechende Abstimmung der Fördergeschwindigkeiten die Packgutreihen gleichzeitig gebildet sowie auf ihren zugeordneten Bereitstellungsförderer geschoben und dann zur Lagenbildung gemeinsam abtransportiert werden. Alternativ oder zusätzlich können auch an mehreren Seiten, z.B. an gegenüberliegenden Seiten der Lagenstation mehrere Reihenbildungsvorrichtungen angeordnet sein, so dass die Lagenbildung von zwei oder mehr Seiten abwechselnd oder gleichzeitig erfolgen kann. Hierbei können ebenfalls mehrere Reihenbildungsvorrichtungen an jeder Seite parallel nebeneinander angeordnet sein.

Um die Drehung von Packgütern während des Transports und ohne stationäre Anschläge durchführen zu können, kann eine Drehstation mit mehreren parallel nebeneinander und ggf. auch mehreren hintereinander angeordneten Förderabschnitten eingesetzt werden. Durch unterschiedliche Fördergeschwindigkeiten der quer zur Transportrichtung benachbarten Förderabschnitte kann das Packgut gedreht werden. Die Drehstation lässt sich durch eine geeignete Überwachungseinrichtung, z.B. eine optische Messeinrichtung, insbesondere ein Kamerasystem, überwachen und ggf. steuern. Durch eine Überwachungseinrichtung kann alternativ oder zusätzlich auch die Positionierung und Abstandsbildung der Packgüter gesteuert und geregelt werden.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine schematische Draufsicht auf einen Gebindepalettierer mit einer Lagenstation, einer Palettierstation und einer Reihenbildungsvorrichtung,
- Figur 2:: eine abgebrochene schematische Draufsicht auf einen Hochleistungs-Gebindepalettierer mit einer zentralen Lagenstation und vier jeweils paarweise beidseits angeordneten Reihenbildungsvorrichtungen sowie zwei Palettierstationen,
- Figur 3:: eine Variante der Reihenbildungsvorrichtung von Figur 1 und
- Figur 4:: eine Variante der Reihenbildungsvorrichtung von Figur 3.

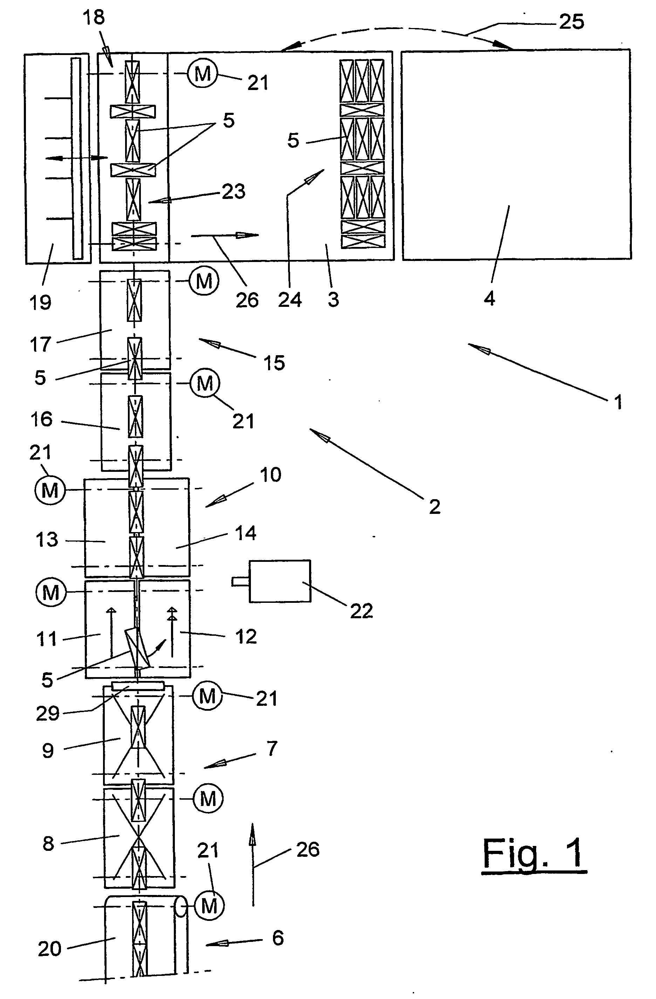

Figur 1, 3 und 4 zeigen einen Gebindepalettierer (1) für Packgüter (5) in schematischer Draufsicht, der ein oder mehrere Lagenstationen (3) und ein oder mehrere Palettierstationen (4) aufweist. An den Gebindepalettierer (1) ist zumindest eine Reihenbildungsvorrichtung (2) angeschlossen, welche wiederum eingangsseitig an eine Zuführung (6), z.B. einen Stauförderer mit Förderrollen, Förderband oder dergleichen angeschlossen ist. Die auf der Zuführung (6) ankommenden und vorzugsweise in einer Reihe Stoß an Stoß transportierten Packgüter (5) werden auf der Reihenbildungsvorrichtung (2) zu einer Packgutreihe (23) orientiert und positioniert, die dann an die Lagenstation (3) zur Bildung einer palettiergerechten Packgutlage (24) übergeben wird. Hierbei wird aus mehreren Reihen (23) die Lage (24) nach und nach aufgebaut, wobei die Reihen (23) untereinander eine unterschiedliche Formgebung und Größe, d.h. eine unterschiedliche Anzahl, Position oder Orientierung von Packgütern (5) haben können. Hierbei können komplizierte und unregelmäßige Lagenbilder erzeugt werden. Sobald die Lage (24) mindestens teilweise, vorzugsweise komplett gebildet ist, wird sie durch einen geeigneten Lagenförderer (25), z.B. ein mehrachsiges Greifersystem an die Palettierstation (4) übergeben, an der aus den einzelnen Lagen (24) die Palette mit Boden, Zwischenlagen, Deckel, Emballage oder dergleichen anderen Komponenten nach und nach aufgestapelt und aufgebaut wird.

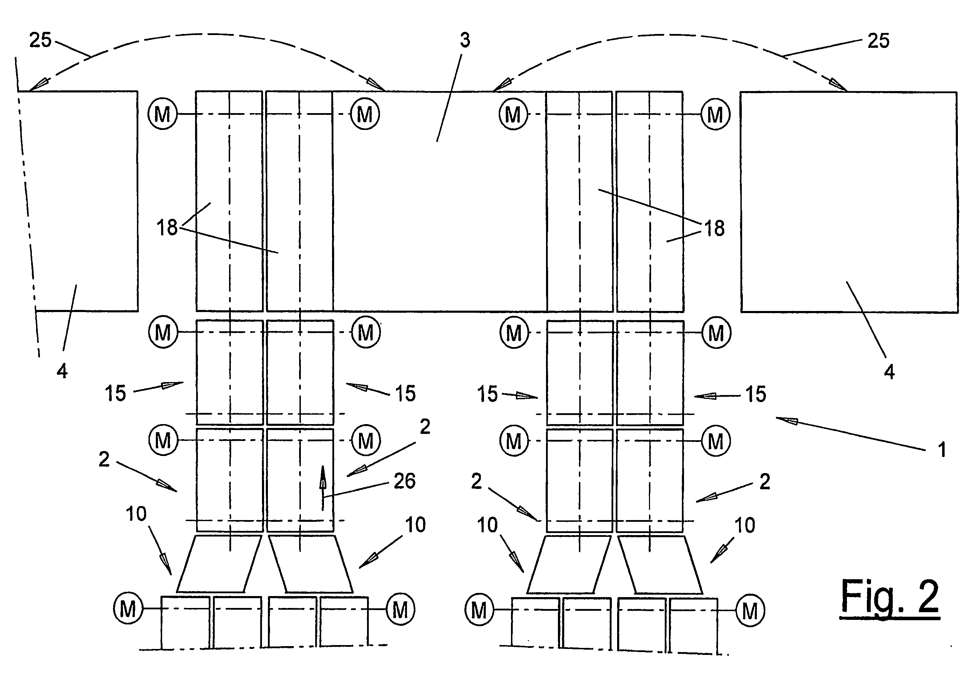

In Figur 1, 3 und 4 ist der Lagenstation (3) eine einzelne Reihenbildungsvorrichtung (2) zugeordnet. In der Variante von Figur 2 wird die Lagenstation (3) von vier Reihenbildungsvorrichtungen (2) bedient, die jeweils paarweise an zwei gegenüberliegenden Seiten der Lagenstation (3) angeordnet sind.

Die Packgüter (5) können eine beliebige transportstabile Form haben. Sie können z.B. aus im Wesentlichen quaderförmigen Päckchen oder Paketen bestehen. Alternativ kann es sich auch um Gebinde mit vorzugsweise länglicher Form handeln, die z.B. aus mehreren in ein oder mehreren Reihen hintereinander und ggf. auch nebeneinander angeordneten Behältern mit einer umgebenden Verpackung bestehen. Diese Behälter können beliebige Formen haben und z.B. aus Zylindern, z.B. Flaschen oder Dosen bestehen. Die Bandbreite der verarbeitbaren Packgutformen ist wesentlich größer als bei vorbekannten Anlagen.

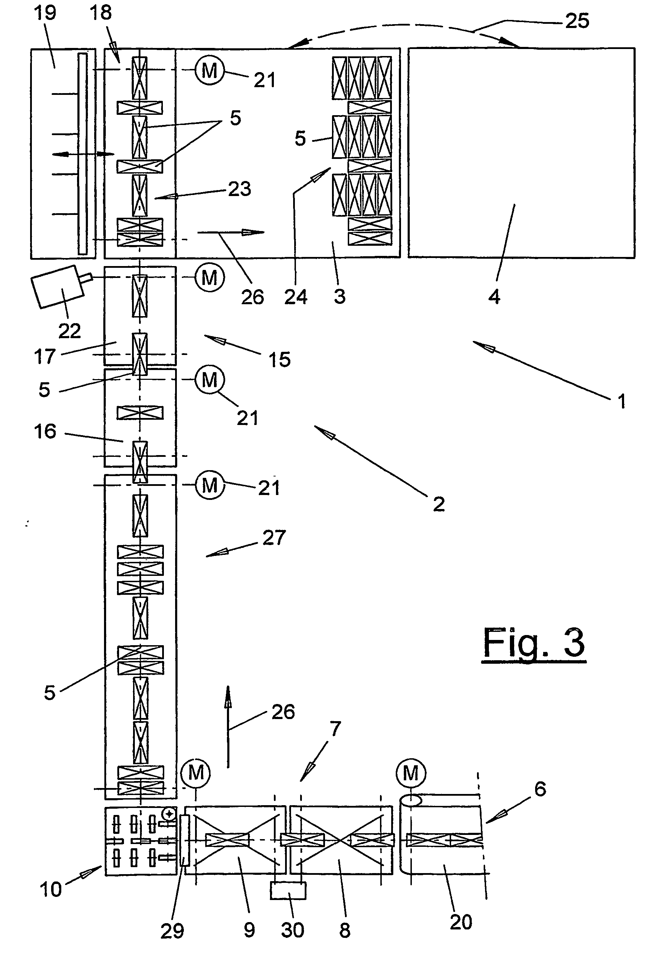

An ein oder mehreren Seiten der Lagenstation (3) ist ein Bereitstellungsförderer (18) angeordnet, auf dem die vorher gebildete Packgutreihe (23) zur Übergabe an die Lagenstation (3) bereit gestellt wird. Dem Bereitstellungsförderer (8) ist ein Querförderer (19), z.B. ein Schieber zugeordnet, mit dem die Packgutreihe (23) an die Lagenstation (3) übergeben wird. Der Querförderer (19) ist in Figur 1 und 3 vereinfacht als Schieber mit einem geraden Schild und ein oder mehreren Antrieben dargestellt. Er kann alternativ auch komplizierter aufgebaut sein und mehrere einzelne Förderelemente aufweisen, die es erlauben, die einzelnen Packgüter (5) innerhalb der Packgutreihe (23) unter Berücksichtigung von ihrer Orientierung und Position auf die Lagenbildungsfläche zu befördern und dort ggf. in Nischen oder dgl. einzuschieben.

Die Reihenbildungsvorrichtung (2) ist dem Bereitstellungsförderer (18) vorzugsweise vorgeschaltet und an diesen angeschlossen. Die Packgutreihen (23) werden auf der Reihenbildungsvorrichtung (2) während des Transports gebildet, wobei die einzelnen Packgüter (5) die gewünschte Orientierung, insbesondere quer oder schräg liegende Drehstellung, erhalten und außerdem die gewünschte Position, insbesondere den gewünschten gegenseitigen Abstand in Transportrichtung (26) bekommen. Die Übergabe der Packgüter (5) von der Reihenbildungsvorrichtung (2) an den Bereitstellungsförderer (18) kann als Endschritt in den Reihenbildungsprozess einbezogen sein. Die Reihenbildungsvorrichtung (2) ist aus mehreren geeigneten Positionierstationen (7,10,15,27) aufgebaut. Figur 1, 3 und 4 zeigen hierfür drei verschiedene Ausführungsformen.

Im gezeigten Ausführungsbeispiel von Figur 1 besteht die Reihenbildungsvorrichtung (2) aus einer Trennstation (7), einer nachgeschalteten Drehstation (10) und einer dieser wiederum nachgeschalteten Reihenstation (15). Die Reihenstation (15) ist ausgangsseitig an den Bereitstellungsförderer (18) angeschlossen. Die Trennstation (7) ist eingangsseitig an die Zuführung (6) angeschlossen.

Die Positionierstationen (7,10,15) bestehen im bevorzugten Ausführungsbeispiel aus geeigneten Förderern, die die vorzugsweise mit Längsausrichtung zugeführten Packgüter (5) in Transportrichtung (26) bewegen und zugleich ihnen während des Transports die gewünschte Orientierung, insbesondere Drehstellung und den gewünschten gegenseitigen Abstand vermitteln. In der gezeigten Ausführungsform werden hierbei in den Positionierstationen (7,10,15) nacheinander Packgutreihen (23) gebildet, die jeweils aus mehreren in einer Linie hintereinander angeordneten Packgütern (5) bestehen.

Alternativ ist es hierbei auch möglich, durch Einschaltung geeigneter Zwischenstationen zumindest bereichsweise zwei oder mehrere Packgüter (5) quer zur Transportrichtung (26) nebeneinander anzuordnen. Die einzelnen Positionierstationen (7,10,15) müssen außerdem nicht wie in Figur 1 in einer geraden Reihe hintereinander angeordnet und direkt aneinander angeschlossen sein, sondern können auch über Zwischenförderer über Eck angeordnet und mittelbar miteinander verbunden sein.

Die Trennstation (7) ist als Einlauftrennförderer ausgebildet und besitzt vorzugsweise zwei in Transportrichtung (26) hintereinander angeordnete Trennförderabschnitte (8,9). Die Trennförderabschnitte (8,9) haben jeweils einen eigenen steuerbaren und regelbaren Antrieb (21) und können auf unterschiedliche Geschwindigkeiten eingestellt werden, wobei die Fördergeschwindigkeit in Transportrichtung (28) vorzugsweise steigt. Z.B. hat der erste Trennförderabschnitt (8) eine Geschwindigkeit von 0,4 m/sec und der folgende Trennförderabschnitt (9) eine Geschwindigkeit von 0,6 m/sec.

Die Trennförderabschnitte (8,9) sind in der bevorzugten Ausführungsform als endlos umlaufende Bandförderer ausgebildet, können alternativ aber jede andere beliebige konstruktive Ausbildung haben. Die Förderbänder haben eine haftfähige Förderfläche, mit der die Packgüter (5) lagegesichert transportiert werden und nicht oder nur wenig verrutschen können. Durch die Geschwindigkeitsabstufungen können die von dem vorzugsweise langsameren Stauförderer (6) Stoß an Stoß zugeführten Packgüter (5) vereinzelt und axial sowie in Transportrichtung (26) voneinander distanziert werden. Die Trennstation (7) kann zur Vergrößerung der Abstandsbildung oder zu anderen Zwecken auch mehrere Trennförderabschnitte (8,9) besitzen.

Die Distanzierung der Packgüter (5) erleichtert und sichert deren Zählung. An der Trennstation (7), z.B. am letzten Trennförderabschnitt (9) kann hierfür eine geeignete Zählvorrichtung (29), z.B. ein Lichtschrankenzähler, angeordnet sein.

An den letzten Trennförderabschnitt (9) ist ausgangsseitig die Drehstation (10) angeschlossen. Diese ist vorzugsweise als Drehförderer ausgestaltet, der die Packgüter (5) während des Transports und im Durchlauf um den gewünschten Winkel dreht, z.B. um 90° von der Längsstellung in die Querstellung. Hierfür besitzt der Drehförderer (10) mindestens zwei in Transportrichtung (26) seitlich mit geringem Abstand nebeneinander angeordnete Drehförderabschnitte (11,12), die jeweils mit einem eigenen steuerbaren oder regelbaren Antrieb (21) versehen sind und sich auf unterschiedliche Fördergeschwindigkeiten einstellen lassen. Diese Geschwindigkeitsdifferenzen sind in Figur 1 durch unterschiedliche Pfeile markiert. In der bevorzugten Ausführungsform sind mehrere solcher Förderabschnittspaare (11,12 und 13,14) in Transportrichtung (26) hintereinander angeordnet. In der gezeigten Ausführungsform hat die Drehstation (10) vier Drehförderabschnitte (11,12,13,14).

In der gezeigten Ausführungsform läuft z.B. der erste Drehförderabschnitt (12) auf der rechten Seite schneller als der benachbarte linke Drehförderabschnitt (11). Hierdurch wird das zunächst in Längsstellung entlang der Transportrichtung (26) ausgerichtete Packgut (5) in der in Figur 1 dargestellten Weise gedreht. Am Ende der Förderabschnitte (11,12) ist die Drehung vorzugsweise beendet. Sie kann aber auch in den anschließenden Förderabschnitten (13,14) fortgesetzt werden.

Die Drehförderabschnitte (11,12,13,14) sind ebenfalls vorzugsweise als endlos umlaufende Bandförderer ausgebildet, wobei die Förderbänder eine gleitfähige Förderfläche aufweisen, die eine Lageänderung und Drehung der Packgüter (5) erlauben.

In der Drehstation (10) können die in Förderrichtung (26) hintereinander angeordneten Drehförderabschnitte (11,13) und (12,14) jeweils die gleiche Geschwindigkeit haben. Die Geschwindigkeiten können aber auch unterschiedlich sein und insbesondere der Abstandsbildung wie bei der Trennstation (10) in Förderrichtung (26) ansteigen. Zur individuellen Orientierung und Abstandsbildung der Packgüter (5) sind die Antriebe (21) der Drehförderabschnitte (11,12,13,14) einzeln steuer- und regelbar.

Der Drehstation (10) ist eine Überwachungsvorrichtung (22) zugeordnet, mit der die Drehvorgänge und ggf. auch die Abstandsbildung überwacht werden können. Die Überwachungsvorrichtung (22) kann in beliebig geeigneter Weise ausgebildet sein. In der bevorzugten Ausführungsform handelt es sich um eine optische Messeinrichtung, z.B. um ein Kamerasystem, mit dem die Orientierung, insbesondere Drehstellung der Packgüter (5) und auch ihre gegenseitige Positionierung, insbesondere ihr axialer Abstand, optisch aufgenommen und ausgewertet werden. Hierfür hat das Kamerasystem (22) eine geeignete Bildauswertung, die mit einer Steuerung (nicht dargestellt) der Reihenbildungsvorrichtung (2) verbunden ist.

In einer einfacheren und kostengünstigeren Variante kann die Überwachungseinrichtung (22) als ein längs der Transportrichtung (26) sich erstreckendes Lichtband ausgebildet sein, welches aus einer Reihe von quer gerichteten Lichtschranken besteht. Aus der Abschattung und Freigabe der einzelnen Lichtschranken kann die Länge der einzelnen Packgüter (5) und somit auch deren Drehstellung sowie die Position und der Vorschub der Packgüter (5) ermittelt werderi. Bei einer bekannten Reihenfolge und Identität der Packgüter (5) lassen sich diese auf ihrem Weg stets verfolgen und lokalisieren.

In einer noch weiter vereinfachten Abwandlung kann die Überwachungseinrichtung (22) aus einer einzelnen quer zum Transportweg (26) gerichteten Lichtschranke in Verbindung mit einer Messeinrichtung für die Fördergeschwindigkeit bestehen. Sie lässt sich insbesondere einsetzen, wenn die Reihenfolge, Identität und Drehstellung der anderweitig gedrehten Packgüter (5) bekannt sind. Bei Durchgang und Abschattung der Lichtschranke wird jedes Packgut (5) lokalisiert, wobei über die bekannte Fördergeschwindigkeit der weitere Weg und die jeweilige Position berechnet werden können.

An diese Steuerung sind auch die verschiedenen Antriebe (21) der Positionierstationen (7,10,15) angeschlossen und werden von dieser Steuerung beaufschlagt. Hieran können außerdem der Bereitstellungsförderer (18) und die Zuführung (6) angeschlossen sein. Die Steuerung kann eine eigenständige Steuerung sein. Sie kann alternativ auch in die Gesamtanlagensteuerung des Gebindepalettierers (1) integriert bzw. angeschlossen sein.

Von der Drehstation (10) werden die in der gewünschten Lage orientierten Packgüter (5) an die Reihenstation (15) übergeben, in der die gewünschten axialen Abstände der Packgüter (5) hergestellt werden. Eine Abstandseinstellung kann ggf. z.T. auch noch in der Drehstation (10) und/oder an der Übergabestelle von der Reihenstation (15) an den Bereitstellungsförderer (18) erfolgen. Die Reihenstation (15) kann hierzu ähnlich wie die Trennstation (7) ausgebildet sein und zwei oder mehr in Förderrichtung (26) hintereinander angeordnete Reihenförderabschnitte (16,17) aufweisen, die in ihrem Geschwindigkeitsniveau über die Antriebe (21) einzeln steuer- und regelbar sind. Die betreffenden Antriebe (21) sind hierzu ebenfalls mit der vorerwähnten Steuerung verbunden.

Wenn der erste Reihenförderabschnitt (16) langsamer als die letzten Drehförderabschnitte (13,14) läuft, wird der Abstand zwischen den axial benachbarten Packgütern (5) an der Übergangsstelle verkleinert. Läuft umgekehrt der Reihenförderabschnitt (16) schneller, wird der Abstand vergrößert. Eine entsprechende Verkleinerung und Vergrößerung der axialen Abstände ist im Weiteren auch am Übergang zwischen dem ersten Reihenförderabschnitt (16) und dem nachfolgenden und evtl. weiteren Reihenförderabschnitt (17) sowie zum Bereitstellungsförderer (18) möglich.

Der Reihenförderer (15) ist ebenfalls vorzugsweise als Bandförderer ausgebildet. Die endlos umlaufenden Förderbänder der Reihenförderabschnitte (16,17) haben hierbei eine haftfähige Förderfläche für einen lagegesicherten Transport der Packgüter (5), der auch am Übergang zwischen den Reihenförderabschnitten (16,17) eine Beschleunigung bzw. Bremsung der Packgüter (5) ermöglicht.

Der Bereitstellungsförderer (18) ist mit dem letzten Reihenförderabschnitt (17) geschwindigkeitsmäßig in einer wählbaren Weise gekoppelt, so dass die am Ende des Reihenförderabschnitts (17) fertig gebildete Packgutreihe (23) ohne weitere interne Lageveränderung oder mit zusätzlicher Abstandsbeeinflussung an den Bereitstellungsförderer (18) übergeben wird.

Der Bereitstellungsförderer (18) ist in der bevorzugten Ausführungsform ebenfalls als Bandförderer ausgebildet. Er ist vorzugsweise einteilig ausgebildet, kann alternativ aber auch aus mehreren Förderabschnitten bestehen. Das jeweils endlos umlaufende Förderband hat eine gleitfähige Förderoberfläche, die ein seitliches Abgeben und insbesondere Überschieben der Packgutreihe (23) auf die Lagenbildungsfläche der Lagenstation (3) ermöglicht.

Figur 3 zeigt eine Variante der Reihenbildungsvorrichtung (2) mit einer anderen Anordnung und Ausbildung der Positionierstationen (10,15,27).

Bei der in Figur 3 gezeigten Variante, schließt eine Trennstation (7) der vorbeschriebenen oder modifizierten Art nebst Zählvorrichtung (29) an die Zuführung (6) an. Auf die Trennstation (7) folgt eine beliebig ausgebildete Drehstation (10), wobei die zum leichteren Drehen in der Trennstation (7) distanzierten Packgüter (5) über Eck transportiert werden. Bei der in Figur 3 gezeigten Variante der Trennstation (7) sind die Trennförderabschnitte (8,9) mit einem gemeinsamen Antrieb (21) ausgestattet und untereinander durch ein Getriebe (30) gekoppelt. Die unterschiedlichen Fördergeschwindigkeiten der Trennförderabschnitte (8,9) werden hierdurch im Relativverhältnis auf einen festen Wert bzw. eine feste Proportionalität eingestellt. Alternativ kann das Getriebe (30) in zwei oder mehr Stufen schaltbar sein und eine Veränderung der Proportionalitäten erlauben.

Ausgangsseitig ist an die Drehstation (10) eine Positionierstation (27), z.B. ein Stauförderer angeschlossen, auf dem die Packgüter (5) je nach ihrer Drehrichtung bzw. Orientierung in einer mehr oder weniger langen Reihe zwischengespeichert werden. Der Stauförderer (27) ist quer zur Zuführung (6) angeordnet. Ausgangsseitig kann sich an den Stauförderer (27) die vorstehend beschriebene Reihenstation (15) anschließen, mit der die zunächst gestauten Packgüter (5) wieder in ihrem Abstand verändert und dann dem Bereitstellungsförderer (18) zugeführt werden können.

Die Drehstation (10) kann eine beliebig geeignete Ausbildung haben. In der gezeigten Ausführungsform wird in der Drehstation (10) auch die Förderrichtung der Packgüter (5) geändert. Um dies zu erreichen, kann die Drehstation (10) z.B. mehrere quer zueinander angeordnete Fördermittel, beispielsweise höhenverstellbare und gesteuert antreibbare Förderrollen aufweisen, die in Figur 3 schematisch angedeutet sind. Je nach sequenzieller Betätigung der unterschiedlich ausgerichteten Fördermittel ändert das Packgut (5) seine Förderrichtung, wobei zugleich die Orientierung wechselt. Ein zunächst längs gerichtet zugeführtes Packgut (5) wird hierdurch in Querausrichtung weiter transportiert. Wenn ein solches längs zugeführtes Packgut (5) allerdings von den in quer zueinander ausgerichteten Fördermitteln gleichzeitig erfasst und angetrieben wird, dreht es über Eck, was durch eine schematisch dargestellte Anlaufrolle unterstützt werden kann. Auf diese Weise behält das Packgut (5) seine Orientierung bei der Weiterbeförderung auf dem Stauförderer (27).

Die gezeigte Art und Anordnung der Drehstation (10) von Figur 3 hat den Vorteil, dass die Packgüter (5) besonders schnell gedreht und in ihrer Orientierung verändert werden können. Der nachgeschaltete Stauförderer (27) kann einen Puffer und Leistungsausgleich bieten, so dass eine optimale Abstimmung für die Leistungsfähigkeit der Lagenstation (3) erfolgen kann. An der Drehstation (10) und/oder dem Stauförderer (27) kann eine Überwachungseinrichtung (22) der vorstehend beschriebenen Art angeordnet sein.

Die Überwachungseinrichtung (22) kann in der Ausführungsform von Figur 3 anders ausgebildet und an anderer Stelle als in Figur 1 angeordnet sein. Bei der kinematisch einfacheren Drehstation (10) von Figur 3 braucht die Drehung und Drehstellung der Packgüter (5) nicht unbedingt überwacht zu werden, auch wenn dies alternativ möglich ist. Die Überwachungseinrichtung (22) hat bei Figur 3 vor allem die Aufgabe, die Reihenbildung, die Abstände der Packgüter (5) und die exakte Übergabe der Packgutreihe (23) an den Bereitstellungsförderer (18) zu überwachen. Zu diesem Zweck können das eingangs beschriebene Lichtband oder die Lichtschranke mit Fördergeschwindigkeitsmessung eingesetzt und an geeigneter Stelle an der Reihenstation (15) angeordnet werden. Vorzugsweise befindet sich die Überwachungseinrichtung (22) am letzten Reihenförderabschnitt (17), insbesondere am Übergang zum Bereitstellungsförderer (18).

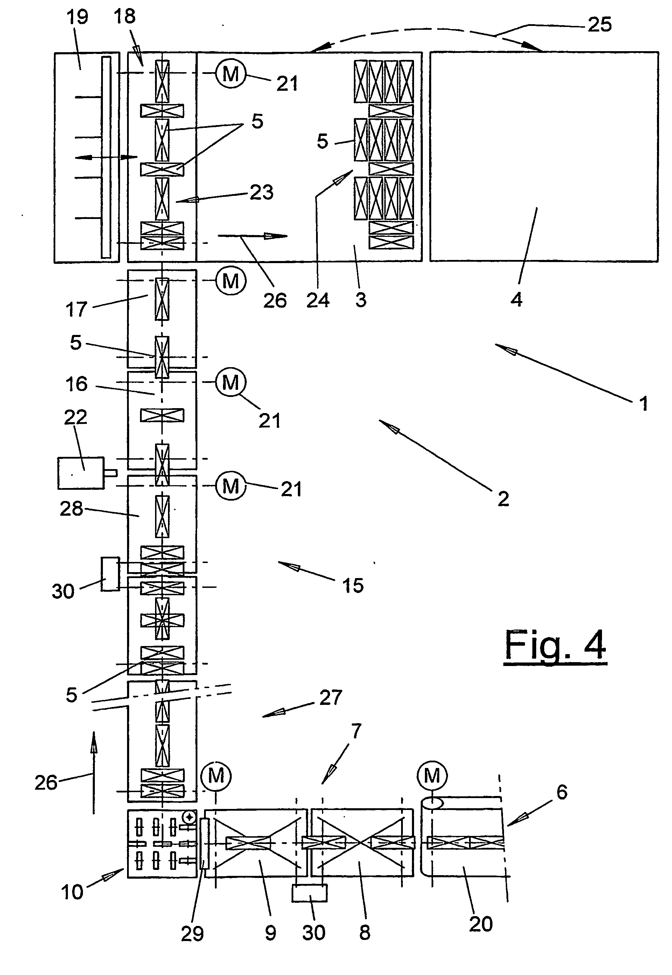

Figur 4 zeigt eine weitere Variante der Reihenbildungsvorrichtung (2), die sich hinsichtlich der Reihenstation (15) und ihrer Leistungsfähigkeit von der Ausführungsform der Figur 3 unterscheidet. Die Reihenstation (15) von Figur 4 hat außer den Reihenförderabschnitten (16,17) noch ein oder mehrere weitere und vorzugsweise vorgeschaltete Reihenförderabschnitte (28), die in ihrem Geschwindigkeitsverhältnis zu dem Reihenförderabschnitt (16) und auch untereinander von der Steuerung beliebig eingestellt werden können, um die gewünschten Abstände in der Packgutreihe (23) zu erzielen.

Der oder die Reihenförderabschnitt(e) (28) können wie die Trennstation (7) von Figur 3 und 4 zwei oder mehr Förderbänder oder dgl. andere Fördermittel aufweisen, die über Getriebe (30) und einen gemeinsamen Antrieb (21) mit fester oder ggf. veränderlicher Proportionalität gekoppelt sind. In der gezeigten Ausführungsform schafft der erste Reihenförderabschnitt (28) mit seinen zwei proportional angetriebenen Förderbändern zunächst feste und gleiche Abstände zwischen den Packgütern (5). An den folgenden, einzeln steuerbaren Reihenförderabschnitten (16,17) werden anschließend individuelle Abstände gebildet und die Packgutreihe (23) aufgebaut. Je mehr Reihenförderabschnitte (16,17,28) vorhanden sind, desto vielfältiger und schneller sind die Reihen- und Abstandsbildungsmöglichkeiten und desto größer ist die Leistungsfähigkeit der ganzen Anlage (1). Die Überwachungsvorrichtung (22) befindet sich bei dieser Ausführungsform am Übergang zwischen dem ersten und zweiten Reihenförderabschnitt (28,16).

In einer anderen nicht dargestellten Variante können die Zuführung (6), die anschließende Drehstation (10) und der nachfolgende Stauförderer (27) in einer Reihe angeordnet sein. In einer weiteren nicht dargestellten Abwandlung kann eine Trennstation (7) der vorbeschriebenen oder anderen Art an geeigneter Stelle in die Reihe der verschiedenen Stationen eingefügt sein.

In einer weiteren Abwandlung ist es möglich, die Reihenbildungsvorrichtung (2) nur mit einer Reihenstation (15) auszurüsten. Die Trennstation (7) und die Drehstation (10) nebst Stauförderer (27) sind dann nicht Bestandteil der Reihenbildungsvorrichtung (2). Die Drehung und Orientierung der Packgüter (5) erfolgt dann an anderer geeigneter Stelle vor der Reihenbildungsvorrichtung (2), so dass dieser die Packgüter (5) mit gegebener Orientierung und Drehlage zugeführt werden. Ggf. kann dieser Reihenstation (15) eine Trennstation (7) nebst Zählvorrichtung (29) vorgeschaltet sein.

In der Variante von Figur 2 können die insgesamt vier Reihenbildungsvorrichtungen (2) beliebig beschickt werden. Sie sind z.B. in der in Figur 1 gezeigten Art ausgebildet, können aber auch der Variante von Figur 3 entsprechen. Es ist bei der Maximalauslastung möglich, alle vier Reihenbildungsvorrichtungen (2) gleichzeitig zu betreiben und auf der Lagenstation (3) die Packgutlage (24) von zwei gegenüber liegenden Seiten aus aufzubauen. Alternativ können auch nur drei, zwei oder bei geringer Auslastung nur eine der Reihenbildungsvorrichtungen (2) betrieben werden.

Die Reihenbildungsvorrichtungen (2) mit ihren jeweils eigenen Zuführungen (6) können hierbei zur Mischung völlig unterschiedlicher Packgüter (5) dienen. Dies ist insbesondere zur Bildung von Display-Paletten vorteilhaft, bei denen bereits während des Reihenbildungs- und Palettiervorgangs verschiedene Produkte in wählbarer Zusammenstellung gemischt werden. Dies ist für einen Vertrieb im Einzelhandel von besonderem Vorteil, weil hierdurch in jeder Packgutlage (27) der Palette ein ganzes Sortiment unterschiedlicher Güter, z.B. unterschiedliche Marmeladensorten, kombiniert und dem Endkunden angeboten werden kann.

Die beliebige Beschickungsmöglichkeit der mehreren Reihenbildungsvorrichtungen (2) ermöglicht auch eine höhere Betriebssicherheit. Bei Ausfall einer Reihenbildungsvorrichtung (2) kann unter Umstellung des Lagenbildungsprogramms auf eine andere Reihenbildungsvorrichtung (2) umgeschaltet werden.

Bei der wahlweisen Belegung der Reihenbildungsvorrichtungen (2) ist es ferner möglich, die Lagenstation (3) auch nur von einer Seite und einem dortigen Vorrichtungspaar aus zu beschicken. Ferner ist es möglich, Reihenbildungsvorrichtungen (2) über Eck und im Weiteren auch an mehr als zwei Seiten der Lagenstation (3) anzuordnen.

Bei der Anordnung von zwei oder mehr parallelen Reihenbildungsvorrichtungen (2) werden auf den vorzugsweise jeweils einzeln zugeordneten Bereitstellungsförderern (18) gleichzeitig Packgutreihen (23) bereit gestellt und vom Querförderer (19) gemeinsam an die Lagenstation (3) übergeben. Die einzelnen Packgutreihen (23) können hierbei nicht nur unterschiedliche Packgüter (5) beinhalten. Sie können darüber hinaus auch komplementär zueinander ausgebildet und orientiert sein, so dass bei der Überschiebebewegung die Packgutreihen (23) passgenau und ggf. mit einem kleinen Abstand ineinander greifen.

In der in Figur 2 gezeigten Ausführungsform ist bei gleichzeitigem Betrieb aller vier Reihenbildungsvorrichtungen (2) eine sehr hohe Leistung möglich. Hierbei kann insbesondere die Packgutlage (24) von zwei gegenüber liegenden Seiten gleichzeitig aufgebaut werden. Um diesem Leistungspotential auch im Palettierbereich gerecht werden zu können, sind beidseits der zentralen Lagenstation (3) zwei Palettierstationen (4) angeordnet, die abwechselnd über zwei Lagenförderer (25) von der Lagenstation (3) beschickt werden. Für die Palettenbildung steht dadurch ausreichend Zeit zur Verfügung.

Abwandlungen der gezeigten Ausführungsbeispiele sind in verschiedener Weise möglich. Die Anordnung und Gestaltung der Positionierstationen (7,10,15) kann variieren. Die Überwachungsvorrichtung (22) kann mehrfach angeordnet sein und insbesondere auch der nachgeschalteten Reihenstation und/oder ggf. auch der vorgeschalteten Trennstation (7) zugeordnet sein. In die Überwachungseinrichtung (22) kann auch die Zähleinrichtung (29) integriert sein, mit der die zur Reihenbildung erforderliche Zahl an Packgütern (5) ermittelt und dementsprechend die Reihenbildungsvorrichtung (2) gesteuert wird. Diese Zähleinrichtung (29) kann auch mehrfach vorhanden sein. An die Steuerung der Reihenbildungsvorrichtung (2) können auch steuerbare Antriebe (21) anderer Anlagenkomponenten, z.B. der Zuführung (6) angeschlossen sein. Auch die konstruktive Gestaltung der einzelnen Förderer und der Förderabschnitte kann variieren. Anstelle von Bandförderern können andere Arten von Fördereinrichtungen, z.B. Plattenkettenförderer, Rollenförderer oder dgl. eingesetzt werden. Variabel ist auch die Gestaltung des Querförderers (19), der statt als Schieber auch als mehrachsig bewegliche Greifeinrichtung ausgestaltet sein kann.

### BEZUGSZEICHENLISTE

- 1: Gebindepalletierer
- 2: Vorrichtung zur Reihenbildung
- 3: Lagenstation
- 4: Palletierstation
- 5: Packgut
- 6: Zuführung, Stauförderer
- 7: Positionierstation, Trennstation, Einlauftrennförderer
- 8: Trennförderabschnitt
- 9: Trennförderabschnitt
- 10: Positionierstation, Drehstation, Drehförderer
- 11: Drehförderabschnitt
- 12: Drehförderabschnitt
- 13: Drehförderabschnitt
- 14: Drehförderabschnitt
- 15: Positionierstation, Reihenstation, Reihenförderer
- 16: Reihenförderabschnitt
- 17: Reihenförderabschnitt
- 18: Bereitstellungsförderer
- 19: Querförderer, Schieber
- 20: Förderband
- 21: Antrieb
- 22: Überwachungseinrichtung, Kamerasystem
- 23: Reihe Packgut.
- 24: Lage Packgut
- 25: Lagenförderer
- 26: Transportrichtung
- 27: Positionierstation, Stauförderer
- 28: Reihenförderabschnitt
- 29: Zähleinrichtung
- 30: Getriebe

## Patentansprüche

1. Vorrichtung zur Reihenbildung von Packgütern (5) an einem Gebindepalletierer (1), welcher mindestens eine Lagenstation (3) und mindestens eine Palletierstation (4) aufweist, wobei die Reihenbildungsvorrichtung (2) mindestens eine Positionierstation (15) aufweist, auf der die Packgüter (5) während des Transports in mindestens einer Reihe (23) mit gewünschten Abständen angeordnet werden, wobei die Positionierstation (15) an einen der Lagenstation (3) zugeordneten Bereitstellungsförderer (18) angeschlossen ist, **dadurch gekennzeichnet, dass** vor der Positionierstation (15) mindestens ein Stauförderer (6,27) angeordnet ist, wobei die Positionierstation (15) mehrere in Transportrichtung (26) hintereinander angeordnete Förderabschnitte (16,17,28) mit steuer- und regelbaren Antrieben (21) zur gewünschten Abstandsbildung der Packgüter besitzt und die Reihenbildungsvorrichtung (2) mindestens eine Überwachungseinrichtung (22) zur Ermittlung und Überwachung der Position und Abstandbildung der Packgüter (5) aufweist.

2. Vorrichtung nach Anspruch 1, **dadurch gekennzeichnet, dass** die Reihenbildungsvorrichtung (2) mehrere hintereinander angeordnete Positionierstationen (7,10,27) aufweist, auf denen die Packgüter (5) während des Transports zusätzlich in ihrer Lage orientiert werden.

3. Vorrichtung nach Anspruch 1 oder 2, **dadurch gekennzeichnet, dass** die Positionierstationen (7,10,15,27) als Trennstation, Drehstation, Reihenstation und/oder Stauförderer ausgebildet sind.

4. Vorrichtung nach Anspruch 1, 2 oder 3, **dadurch gekennzeichnet, dass** die Trennstation (7), die Drehstation (10) und die Reihenstation (15) in einer Linie in Transportrichtung (26) hintereinander geschaltet sind.

5. Vorrichtung nach einem der vorhergehenden Ansprüche, **dadurch gekennzeichnet, dass** die Trennstation (7) an eine Zuführung (6), insbesondere einen Stauförderer angeschlossen ist.

6. Vorrichtung nach einem der Ansprüche 1 bis 4, **dadurch gekennzeichnet, dass** die Drehstation (10) eingangseitig an die Trennstation (7) und ausgangseitig an einen Stauförderer (27) angeschlossen ist.

7. Vorrichtung nach Anspruch 6, **dadurch gekennzeichnet, dass** die Zuführung (6) und der Stauförderer (27) über Eck an die Drehstation (10) angeschlossen sind.

8. Vorrichtung nach einem der vorhergehenden Ansprüche, **dadurch gekennzeichnet, dass** mehrere Reihenbildungsvorrichtungen (2) in direkter Nachbarschaft nebeneinander und/oder an mehreren verschiedenen Seiten an eine Lagenstation (3) angeschlossen sind.

9. Vorrichtung nach einem der vorhergehenden Ansprüche, **dadurch gekennzeichnet, dass** die Positionierstationen (7,10,15) als Förderer mit steuer- und regelbaren Antrieben (21) ausgebildet sind.

10. Vorrichtung nach einem der vorhergehenden Ansprüche, **dadurch gekennzeichnet, dass** die Reihenbildungsvorrichtung (2) mindestens eine Überwachungseinrichtung (22) aufweist, welche die Orientierung der Packgüter (5) ermittelt .

11. Vorrichtung nach einem der vorhergehenden Ansprüche, **dadurch gekennzeichnet, dass** die Reihenbildungsvorrichtung (2) mindestens eine Zählvorrichtung (29) aufweist.

12. Vorrichtung nach einem der vorhergehenden Ansprüche, **dadurch gekennzeichnet, dass** die Förderabschnitte (16,17) der Reihenstation (15) in Transportrichtung (26) steigende Fördergeschwindigkeiten aufweisen.

13. Vorrichtung nach einem der vorhergehenden Ansprüche, **dadurch gekennzeichnet, dass** der Bereitstellungsförderer (18) die gleiche Fördergeschwindigkeit wie der letzte Förderabschnitt (17) der Reihenstation (15) aufweist.

14. Vorrichtung nach einem der vorhergehenden Ansprüche, **dadurch gekennzeichnet, dass** die Förderabschnitte (8,9,16,17,28) der Trenn- und Reihenstation (7,15) eine haftfähige Förderfläche für einen lagegesicherten Transport der Packgüter (5) aufweisen.

15. Vorrichtung nach einem der vorhergehenden Ansprüche, **dadurch gekennzeichnet, dass** die Förderabschnitte (11,12,13,14,) der Drehstation (10) und der Bereitstellungsförderer (18) eine gleitfähige Förderfläche für einen lageveränderlichen Transport der Packgüter (5) aufweisen.

16. Verfahren zur Reihenbildung von Packgütern (5) an einem Gebindepalletierer (1), welcher mindestens eine Lagenstation (3) und mindestens eine Palletierstation (4) aufweist, wobei die Reihenbildung der Packgüter (5) vor der Bereitstellung an der Lagenstation (3) und während des Packguttransports erfolgt und die Packgüter im Durchlauf auf die gewünschten Abstände gebracht werden, **dadurch gekennzeichnet, dass** die Packgüter (5) vor der Reihenbildung auf einem Stauförderer (6,27) Stoß an Stoß zugeführt werden und in der Positionierstation (15) mit mehreren in Transportrichtung (26) hintereinander angeordneten Förderabschnitten (16,17,28) mit steuer- und regelbaren Antrieben (21) auf den gewünschten Abstand gebracht werden, wobei die Position der Packgüter (5) mit einer Überwachungseinrichtung (22) ermittelt und überwacht wird.

17. Verfahren nach Anspruch 16, **dadurch gekennzeichnet, dass** die Packgüter (5) während des Packguttransports in die richtige Orientierung, insbesondere Drehlage gebracht und lagengerecht positioniert werden.

## Claims

1. Device for forming rows of packed goods (5) on a package palletizer (1) which has at least one layer station (3) and at least one palletizing station (4), the row-forming device (2) having at least one positioning station (15) on which the packed goods (5) are arranged in at least one row with desired spacings (23) during transportation, the positioning station (15) being connected to a supply conveyor (18) assigned to the layer station (3), **characterized in that** at least one accumulation conveyor (6, 27) is arranged upstream of the positioning station (15), the positioning station (15) possessing, arranged one behind the other in the transporting direction (26), a plurality of conveying sections (16, 17, 28) with controllable and adjustable drives (21) to produce the desired spacing of the packed goods, and the row-forming device (2) having at least one monitoring means (22) for determining and monitoring the position and spacing of the packed goods (5).

2. Device according to Claim 1, **characterized in that** the row-forming device (2) has a plurality of positioning stations (7, 10, 27) which are arranged one behind the other and on which the packed goods (5) are additionally oriented in their position during transportation.

3. Device according to Claim 1 or 2, **characterized in that** the positioning stations (7, 10, 15, 27) are designed as separating station, rotary station, row station and/or accumulation conveyor.

4. Device according to Claim 1, 2 or 3, **characterized in that** the separating station (7), the rotary station (10) and the row station (15) are connected one behind the other in a line in the transporting direction (26).

5. Device according to one of the preceding claims, **characterized in that** the separating station (7) is connected to a feeder (6), in particular an accumulation conveyor.

6. Device according to one of Claims 1 to 4, **characterized in that** the rotary station (10) is connected on its inlet side to the separating station (7) and on its outlet side to an accumulation conveyor (27).

7. Device according to Claim 6, **characterized in that** the feeder (6) and the accumulation conveyor (27) are connected diagonally to the rotary station (10).

8. Device according to one of the preceding claims, **characterized in that** a plurality of row-forming devices (2), directly neighbouring one another and/or on a plurality of different sides, are connected to a layer station (3).

9. Device according to one of the preceding claims, **characterized in that** the positioning stations (7, 10, 15) are designed as conveyors with controllable and adjustable drives (21).

10. Device according to one of the preceding claims, **characterized in that** the row-forming device (2) has at least one monitoring means (22) which determines the orientation of the packed goods (5).

11. Device according to one of the preceding claims, **characterized in that** the row-forming device (2) has at least one counting device (29).

12. Device according to one of the preceding claims, **characterized in that** the conveying sections (16, 17) of the row station (15) have conveying speeds which increase in the transporting direction (26).

13. Device according to one of the preceding claims, **characterized in that** the supply conveyor (18) has the same conveying speed as the last conveying section (17) of the row station (15).

14. Device according to one of the preceding claims, **characterized in that** the conveying sections (8, 9, 16, 17, 28) of the separating and row station (7, 15) have a high-friction conveying surface for positionally secure transportation of the packed goods (5).

15. Device according to one of the preceding claims, **characterized in that** the conveying sections (11, 12, 13, 14) of the rotary station (10) and the supply conveyor (18) have a low-friction conveying surface for positionally variable transportation of the packed goods (5).

16. Method of forming rows of packed goods (5) on a package palletizer (1) which has at least one layer station (3) and at least one palletizing station (4), the packed goods (5) being formed into rows prior to being supplied at the layer station (3) and during transportation of the packed goods, and the packed goods being brought to the desired spacings during their passage, **characterized in that**, prior to being formed into rows, the packed goods (5) are fed in, butting against one another, on an accumulation conveyor (6, 27) and, in the positioning station (15), are brought to the desired spacing by means of a plurality of conveying sections (16, 17, 28) with controllable and adjustable drives (21), these sections being arranged one behind the other in the transporting direction (26), the position of the packed goods (5) being determined and monitored by a monitoring means (22).

17. Method according to Claim 16, **characterized in that**, during transportation of the packed goods, the packed goods (5) are brought into the correct orientation, in particular a rotary position, and are positioned in the proper position.

## Revendications

1. Dispositif pour former des rangées d'articles empaquetés (5) sur un palettiseur de conteneurs (1), lequel présente au moins un poste de mise en couche (3) et au moins un poste de palettisation (4), le dispositif pour former des rangées (2) présentant au moins un poste de positionnement (15), sur lequel les articles empaquetés (5) sont disposés pendant le transport dans au moins une rangée (23) avec des espacements souhaités, le poste de positionnement (15) étant raccordé à un transporteur d'alimentation (18) associé au poste de mise en couche (3), **caractérisé en ce qu'**avant le poste de positionnement (15) est disposé au moins un transporteur d'accumulation (6, 27), le poste de positionnement (15) possédant plusieurs sections de transport (16, 17, 28) disposées les unes derrière les autres dans la direction de transport (26) avec des entraînements commandables et réglables (21) pour la formation d'espacements souhaités des articles empaquetés et le dispositif pour former des rangées (2) présentant au moins un dispositif de surveillance (22) pour détecter et surveiller la position et la formation d'espacements des articles empaquetés (5).

2. Dispositif selon la revendication 1, **caractérisé en ce que** le dispositif pour former des rangées (2) présente plusieurs postes de positionnement disposés les uns derrière les autres (7, 10, 27), sur lesquels les articles empaquetés (5) sont en outre orientés dans leur couche pendant le transport d'accumulation.

3. Dispositif selon la revendication 1 ou 2, **caractérisé en ce que** les postes de positionnement (7, 10, 15, 27) sont réalisés sous forme de poste de séparation, de poste de rotation, de poste de mise en rangée et/ou de transporteur d'accumulation.

4. Dispositif selon la revendication 1, 2 ou 3, **caractérisé en ce que** le poste de séparation (7), le poste de rotation (10) et le poste de mise en rangée (15) sont montés en ligne les uns derrière les autres dans la direction de transport (26).

5. Dispositif selon l'une quelconque des revendications précédentes, **caractérisé en ce que** le poste de séparation (7) est raccordé à une alimentation (6), notamment un transporteur d'accumulation.

6. Dispositif selon l'une quelconque des revendications 1 à 4, **caractérisé en ce que** le poste de rotation (10) est raccordé du côté de l'entrée au poste de séparation (7) et du côté de la sortie à un transporteur d'accumulation (27).

7. Dispositif selon la revendication 6, **caractérisé en ce que** l'alimentation (6) et le transporteur d'accumulation (27) sont raccordés par un coin au poste de rotation (10).

8. Dispositif selon l'une quelconque des revendications précédentes, **caractérisé en ce que** plusieurs dispositifs pour former des rangées (2) sont raccordés à proximité directe les uns des autres et/ou au niveau de plusieurs côtés différents à un poste de mise en couche (3).

9. Dispositif selon l'une quelconque des revendications précédentes, **caractérisé en ce que** les postes de positionnement (7, 10, 15) sont réalisés sous forme de transporteurs avec des entraînements commandables et réglables (21).

10. Dispositif selon l'une quelconque des revendications précédentes, **caractérisé en ce que** le dispositif pour former des rangées (2) présente au moins un dispositif de surveillance (22) qui détecte l'orientation des articles empaquetés (5).

11. Dispositif selon l'une quelconque des revendications précédentes, **caractérisé en ce que** le dispositif pour former des rangées (2) présente au moins un dispositif de comptage (29).

12. Dispositif selon l'une quelconque des revendications précédentes, **caractérisé en ce que** les sections de transport (16, 17) du poste de mise en rangée (15) présentent des vitesses de transport croissant dans la direction de transport (26).

13. Dispositif selon l'une quelconque des revendications précédentes, **caractérisé en ce que** le transporteur d'alimentation (18) présente la même vitesse de transport que la dernière section de transport (17) du poste de mise en rangée (15).

14. Dispositif selon l'une quelconque des revendications précédentes, **caractérisé en ce que** les sections de transport (8, 9, 16, 17, 28) du poste de séparation et de mise en rangée (7, 15) présentent une surface de transport capable d'adhérer pour un transport des articles empaquetés (5) garantissant le maintien de la position.

15. Dispositif selon l'une quelconque des revendications précédentes, **caractérisé en ce que** les sections de transport (11, 12, 13, 14) du poste de rotation (10) et du transporteur d'alimentation (18) présentent une surface de transport capable de glisser pour un transport des articles empaquetés (5) permettant une modification de la position.

16. Procédé pour former des rangées d'articles empaquetés (5) sur un palettiseur de conteneurs (1), lequel présente au moins un poste de mise en couche (3) et au moins un poste de palettisation (4), la formation de rangées des articles empaquetés (5) s'effectuant avant l'alimentation au niveau du poste de mise en couche (3) et pendant le transport des articles empaquetés et les articles empaquetés étant placés aux espacements souhaités au cours de leur transport, **caractérisé en ce que** les articles empaquetés (5) sont acheminés par à-coups avant la formation de rangées sur un transporteur d'accumulation (6, 27) et sont amenés à l'espacement souhaité dans le poste de positionnement (15) avec plusieurs sections de transport (16, 17, 18) disposées les unes derrière les autres dans la direction de transport (26) avec des entraînements commandables et réglables (21), la position des articles empaquetés (5) étant détectée et surveillée au moyen d'un dispositif de surveillance (22).

17. Procédé selon la revendication 16, **caractérisé en ce que** les articles empaquetés (5) sont amenés dans l'orientation correcte, notamment la position en rotation, et sont positionnés de manière correcte dans leur couche pendant le transport des articles empaquetés.
